(19) Europäisches Patentamt
European Patent Office
Office européen des brevets

(11) Numéro de publication: **0 140 770**
**A2**

(12) # DEMANDE DE BREVET EUROPEEN

(21) Numéro de dépôt: **84402011.5**

(22) Date de dépôt: **08.10.84**

(51) Int. Cl.[4]: **C 08 L 83/04**, C 08 K 9/10, C 08 J 3/24

(30) Priorité: **19.10.83 FR 8316614**

(43) Date de publication de la demande: **08.05.85**
**Bulletin 85/19**

(84) Etats contractants désignés: **AT BE CH DE FR GB IT LI LU NL SE**

(71) Demandeur: **RHONE-POULENC SPECIALITES CHIMIQUES, "Les Miroirs" 18, Avenue d'Alsace, F-92400 Courbevoie (FR)**

(72) Inventeur: **Donnadieu, André, 50, rue Joliot Curie, F-69005 - Lyon (FR)**
Inventeur: **Letoffe, Michel, 5, avenue de Limburg, F-69110 - Sainte-Foy-Les-Lyon (FR)**

(74) Mandataire: **Seugnet, Jean Louis et al, RHONE-POULENC RECHERCHES Service Brevets Chimie et Polymères 25, quai Paul Doumer, F-92408 Courbevoie (FR)**

(54) **Encapsulation de l'accélérateur de durcissement de compositions organopolysiloxaniques contenant des polyacyloxysilanes et durcissant en élastomères.**

(57) La présente invention concerne une composition organopolysiloxanique pouvant réticuler en élastomère comprenant un polysiloxane polyhydroxylé A, un polyacyloxysilane B et un accélérateur de durcissement C, caractérisée en ce que l'accélérateur de durcissement C est contenu dans des microcapsules constituées d'une pellicule imperméable, ladite pellicule n'étant plus imperméable sous l'effet d'un traitement thermique et/ou mécanique adaptés.

La composition selon l'invention peut se présenter sous une forme mono- ou bi-composante et est utilisable notamment à la fabrication de joints dans l'industrie automobile.

# ENCAPSULATION DE L'ACCELERATEUR DE DURCISSEMENT DE COMPOSITIONS ORGANOPOLYSILOXANIQUES CONTENANT DES POLYACYLOXYSILANES ET DURCISSANT EN ELASTOMERES

La présente invention concerne l'encapsulation de l'accélérateur de durcissement de compositions organopolysiloxaniques contenant des polyacyloxysilanes et durcissant en élastomères.

Ces compositions, à l'opposé des compositions monocomposantes connues portant également des radicaux acyloxy liés à des atomes de silicium (décrites notamment dans les brevets français 1 198 749, 1 220 348, 2 429 811 et la demande de brevet français 82/13 505 déposée le 30 juillet 1982) ne sont pas stables au stockage mais leur durée de réticulation est beaucoup plus courte, par exemple de l'ordre de quelques minutes, jusqu'à 60 minutes. Elles doivent donc être préparées extemporanément.

Les compositions du type ci-dessus à durée de réticulation rapide, cette réticulation étant indépendante du taux d'humidité de l'atmosphère environnante, sont utilisées dans des domaines d'application ou cette propriété est particulièrement intéressante comme par exemple la fabrication de joints "in situ" dans l'industrie automobile. Des compositions du type ci-dessus, portant des radicaux acyloxy liés à des atomes de silicium, dont la durée de réticulation est indépendante de l'humidité de l'air ambiant, sont connues par le brevet britannique 1 308 985, ce brevet décrivant un procédé de durcissement consistant à ajouter aux compositions 3 à 15 % d'un accélérateur de durcissement constitué par un silico-aluminate ayant de 5 à 10 % en poids d'eau absorbée en vue de fabriquer des pièces moulées en élastomère silicone par injection basse pression.

Dans les demandes de brevet français n° 83/01504 et 83/01505 déposées le 27 janvier 1983, on décrit également des compositions de ce type mais dont l'accélérateur de durcissement est respectivement choisi parmi un hydroxyde alcalin et alcalino-terreux ou bien par un mélange constitué par de l'eau et un phosphate et/ou un, polyphosphate alcalin ou alcalino-terreux.

Les accélérateurs décrits dans ces deux demandes de brevet français ont permis d'opérer, par rapport à l'enseignement du brevet britannique 1 308 985 un progrès très important en ce sens que, d'une part, la nature et les quantités d'accélérateurs introduites n'altèrent pas les propriétés mécaniques de l'élastomère obtenu et, d'autre part, ces accélérateurs ont donné la possibilité d'utiliser les compositions de ce type pour le collage ou le jointement de pièces circulant sur des chaînes industrielles de montage ou pour lesquelles il n'existe pas d'aires de stockage disponibles qui assureraient leur durcissement complet.

Toutefois les compositions décrites dans ce brevet britannique et dans ces deux demandes de brevet français ne peuvent être à un seul emballage (compositions monocomposantes) et doivent être conditionnées en 2 composantes généralement, d'une part, la composante organopolysiloxanique et, d'autre part, l'accélérateur car le mélange de ces deux composantes doit se faire extemporanément c'est-à-dire au moment de l'emploi.

Cette façon de procéder présente des inconvénients. Tout d'abord il existe bien entendu un risque qu'au moment de l'emploi le dosage respectif des deux composantes ne soit pas fait correctement. En outre, dans le cas notamment de la fabrication automatique des joints "en forme" ou "in situ", le mélange se fait dans un appareil automatique de dépose des compositions possédant une tête mélangeuse recevant la composition polysiloxanique et l'accélérateur. Il est alors nécessaire que les compositions utilisées dans cet appareil présentent une durée de durcissement bien ajustée pour éviter des prises en masses dans la tête mélangeuse ce qui nécessite une mise au point longue et délicate. Par ailleurs, il est nécessaire de vidanger ces têtes mélangeuses lors de l'arrêt ou d'une panne de l'appareil pour éviter une prise en masse.

La présente invention a pour but de supprimer les inconvénients ci-dessus ou tout au moins d'en atténuer très sensiblement les effets. Dans ce qui suit les pourcentages aux parties indiqués sont, sauf mention contraire, en poids.

La présente invention a en effet pour but de proposer une composition organopolysiloxanique contenant des polyacyloxysilanes pouvant durcir très rapidement en élastomères en présence d'accélérateur contenant et/ou engendrant de l'eau qui puisse être dans certains cas présentée sous forme d'une composition monocomposante, c'est-à-dire à un seul emballage stable au stockage comportant déjà l'accélérateur de durcissement.

Un autre but de la présente invention est de proposer une composition organopolysiloxanique du type ci-dessus dont la réticulation en élastomère, indépendante du taux d'humidité de l'atmosphère environnante, peut être effectuée rapidement et peut être déclenchée au moment désiré, soit par le mélange de la composante organopolysiloxanique avec l'accélérateur suivi éventuellement par un traitement thermique ou mécanique approprié dans le cas de compositions bicomposantes, soit seulement par un traitement thermique et/ou mécanique appropriés dans le cas de compositions monocomposantes (à un seul emballage) ce qui permet d'éviter, dans ce dernier cas, une prise en masse intempestive de la composition et/ou une erreur de dosage de l'accélérateur ou de la composition organopolysiloxanique lors de son utilisation.

Un autre but de la présente invention est de proposer une composition organopolysiloxanique pouvant être monocomposante, convenant plus spécialement pour la formation, en particulier sur appareil automatique, de joints "in situ" utilisés dans l'industrie automobile qui ne présente pas le risque de prendre en masse, grâce à une plus grande maîtrise du déclenchement de la réticulation.

Ces buts et d'autres qui apparaîtront à la lecture de la description ci-après sont atteints par la présente invention qui concerne en effet une composition organopolysiloxanique pouvant réticuler en élastomère comprenant un polysiloxane polyhydroxyle (A), un polyacyloxysilane (B)et un accélérateur de durcissement (C), caractérisée en ce que l'accélérateur de durcissement (C) est contenu dans des microcapsules constituées d'une pellicule imperméable, ladite pellicule n'étant plus imperméable sous l'effet d'un traitement thermique et/ou par irradiation et/ou sous l'effet d'un traitement mécanique adaptés.

La composition selon l'invention peut comporter en outre de 1 à 150 parties d'une charge minérale D pour 100 parties de constituant A.

Plus spécifiquement la présente invention a pour objet une composition organopolysiloxanique pouvant réticuler en élastomère, comprenant au moins :

A - 100 parties de polymères principalement α-ω di(hydroxy)-diorganopolysiloxaniques, de viscosité 700 à 1 000 000 mPa.s à 25°C, constitués chacun d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogènes, de groupes cyano.

B - 2 à 20 parties d'agents réticulants de formule générale $R_pSi(OCOR')_{4-p}$ dans laquelle le symbole R a la signification donnée sous (A), le symbole R', représente un radical hydrocarboné exempt d'insaturation aliphatique, ayant de 1 à 15 atomes de carbone et le symbole p représente zéro ou un.

C - 0,01 à 7 parties, pour 100 parties de A + B + C, d'accélérateur de durcissement contenu dans ces microcapsules constituées d'une pellicule imperméable, ladite pellicule n'étant plus imperméable sous l'effet d'un traitement thermique et/ou sous l'effet d'un traitement mécanique en vue de libérer le constituant (C).

Les polymères (A) de viscosité 700 à 1 000 000 mPa.s à 25°C, de préférence 1 000 à 700 000 mPa.s à 25°C, sont des polymères essentiellement linéaires, constitués de motifs diorganosiloxy de formule précitée $R_2SiO$, et bloqués à chaque extrémité de leur chaîne par un groupe hydroxyle ; toutefois la présence de motifs monoorganosiloxy de formule $RSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 8 atomes de carbone, substitués ou non par des atomes d'halogènes ou des groupes cyano, et représentés par les symboles R, peuvent être choisis parmi :

- les radicaux alcoyles et halogénoalcoyles ayant de 1 à 8 atomes de carbone tels que les radicaux méthyles, éthyles, n-propyles, isopropyles, n-butyles, n-pentyles, n-hexyles, éthyl-2 hexyles, n-octyles, trifluoro-3,3,3 propyles, trifluoro-4,4,4 butyles, pentafluoro-4,4,4,3,3 butyles
- les radicaux cycloalcoyles et halogénocycloalcoyles ayant de 4 à 8 atomes de carbone tels que les radicaux cyclopentyles, cyclohexyles, méthylcyclohexyl difluoro-2,3 cyclobutyles, difluoro-3,4 méthyl-5 cycloheptyles
- les radicaux alcényles ayant de 2 à 4 atomes de carbone tels que les radicaux vinyles, allyles, butène-2 yles
- les radicaux aryles et halogénoaryles ayant de 6 à 8 atomes de carbone tels que les radicaux phényles, tolyles, xylyles, chlorophényles, dichlorophényles, trichlorophényles
- les radicaux cyanoalcoyles dont les chaînons alcoyles ont de 2 à 3 atomes de carbone tels que les radicaux β-cyanoéthyle et γ-cyanopropyles.

A titre d'exemple de motifs représentés par la formule $R_2SiO$ on peut citer ceux de formules :

$(CH_3)_2SiO$

$CH_3(CH_2{=}CH)SiO$

$CH_3(C_6H_5)SiO$

$(C_6H_5)_2SiO$

$CF_3CH_2CH_2(CH_3)SiO$

$NC{-}CH_2CH_2(CH_3)SiO$

$NC{-}CH(CH_3)CH_2(CH_2{=}CH)SiO$

$NC{-}CH_2CH_2CH_2(C_6H_5)SiO$

Il doit être compris, selon une variante de l'invention, que l'on peut utiliser comme polymères (A) des copolymères ou un mélange constitué de polymères α-ω di(hydroxy)diorganopolysiloxaniques qui diffèrent entre eux par le poids moléculaire et/ou la nature des groupements liés aux atomes de silicium.

Ces copolymères α-ω di(hydroxy)diorganopolysiloxaniques (A) sont commercialisés ; en outre, ils peuvent être aisément fabriqués. L'une des techniques de fabrication les plus courantes

consiste, dans une première phase, à polymériser des diorganocyclopolysiloxanes à l'aide de quantités catalytiques d'agents alcalins ou acides puis à traiter les polymérisats avec des quantités calculées d'eau (brevets français 1 134 005, 1 198 749, 1 226 745); cet apport d'eau, qui est d'autant plus élevé que les polymères à préparer ont une viscosité plus faible, peut être remplacé en totalité ou en partie par des huiles α-ω di(hydroxy)diorganopolysiloxaniques de faible viscosité, par exemple allant de 5 à 200 mPa.s à 25°C, ayant un taux élevé de radicaux hydroxyles, par exemple de 3 à 14 %.

Les agents réticulants (B) sont employés à raison de 2 à 20 parties de préférence de 3 à 15 parties, pour 100 parties des polymères α-ω di(hydroxy)diorganopolysiloxaniques (A).

Ils répondent à la formule précitée $R_pSi(OCOR')_{4-p}$ dans laquelle, comme déjà indiqué, le symbole R a la signification donnée sous (A), le symbole R' représente un radical hydrocarboné exempt d'insaturation aliphatique ayant de 1 à 15 atomes de carbone et le symbole p représente zéro ou 1.

Des précisions ont été déjà fournies sur la nature des radicaux représentés par le symbole R. Quant au symbole R' il représente un radical choisi dans le groupe constitué :

- des radicaux alcoyles ayant de 1 à 15 atomes de carbone tels que les radicaux méthyles, éthyles, n-propyles, n-butyles, n-pentyles, éthyl-1 pentyles, n-hexyles, éthyl-2 hexyle, n-octyles, néodécyles, n-décyles, n-dodécyles, n-pentadécyles
- des radicaux cycloalcoyles ayant de 5 à 6 atomes de carbone nucléaire tels que les radicaux cyclopentyles et cyclohexyles
- des radicaux aryles ayant de 6 à 8 atomes de carbone tels que les radicaux phényles, tolyles, xylyles.

A titre d'exemples d'agents réticulants (B) peuvent être cités ceux répondant aux formules suivantes :

$CH_3Si(OCOCH_3)_3$

$C_2H_5Si-(OCOCH_3)_3$

$CH_2=CHSi(OCOCH_3)_3$

$C_6H_5Si-(OCOCH_3)_3$

$CH_3Si\ \{OCOCH(C_2H_5)(CH_2)_3-CH_3\}_3$

$CF_3CH_2CH_2Si(OCOC_6H_5)_3$

$CH_3Si(OCOC_6H_5)_3$

$CH_3Si(OCOCH_3)_2\ (OCOCH-(CH_2)_3CH_3$
$\quad\quad\quad\quad\quad\quad |$
$\quad\quad\quad\quad\quad\quad C_2H_5$

$CH_3COOSi\ \{OCOCH-(CH_2)_3CH_3\}_3$
$\quad\quad\quad\quad |$
$\quad\quad\quad\quad C_2H_5$

Il est clair que l'on peut remplacer dans les compositions de l'invention les constituants A et B par les produits dévolatilisés provenant de la réaction stoechiométrique de A sur B conformément au procédé décrit dans le brevet français 1 220 348.

Avec ces agents réticulants (B) peuvent être associés des silanes portant seulement chacun deux groupes hydrolysables ; ces silanes répondent à la formule :

$R''_2Si(OCOR')_2$

dans laquelle les symboles R' ont la signification du symbole R' de la formule :

$R_pSi(OCOR')_{4-p}$

et les symboles R" ont la signification du symbole R de cette même formule ou représente un radical tertiobutoxy de formule $(CH_3)_3C-O-$.

A titre d'exemples de ces silanes, peuvent être cités ceux de formules ci-après :

$(CH_3)_2Si(OCOCH_3)_2$

$CH_2=CH(CH_3)Si(OCOCH_3)_2$

$(C_6H_5)_2Si(OCOCH_3)_2$

$\{(CH_3)_3C-O\}_2Si(OCOCH_3)_2$

$(CH_3)_2Si\{OCOCH(C_2H_5)(CH_2)_3CH_3\}_2$

$\{(CH_3)_3CO\}_2Si\ OCOCH(C_2H_5)(CH_2)_3CH_3\ _2$

La quantité molaire mise en oeuvre des silanes de formule:

$R''_2Si(OCOR')_2$

par rapport à celle mise en oeuvre des silanes réticulantes (B) de formule :

$R_pSi(OCOR')_{4-p}$

n'est pas étroitement définie, il est nécessaire cependant qu'elle ait une limite supérieure de manière que le mélange des deux types de silanes renferme toujours en moyenne au moins 2,5 groupes -OCOR' pour un atome de silicium.

Ainsi en prenant par exemple 1 mole du silane réticulant (B) de formule $RSi(OCOR')_3$ (avec p = 1), il faut lui associer au plus 1 mole du silane $R''_2Si(OCOR')_2$ ; de même en prenant 1 mole du silane réticulant (B) de formule $Si(OCOR')_4$ (avec p = 0) il faut lui associer au plus 3 moles de silane $R''_2Si(OCOR')_2$.

Le rôle principal des silanes de formule $R''_2Si(OCOR')_2$ est celui de coupler les chaînes des polymères α-ω di(hydroxy)-diorganopolysiloxaniques (A) ce qui permet d'obtenir des élastomères ayant de bonnes caractéristiques physiques en partant de compositions renfermant des polymères (A) dont la viscosité est relativement faible, par exemple allant de 700 à 5 000 mPa.s à 25°C.

L'accélérateur de durcissement utilisable dans le cadre de la présente invention est un produit contenant et/ou engendrant de l'eau par réaction chimique lors de sa mise en contact avec le polyacyloxysilane B.

Ces accélérateurs de durcissement peuvent être notamment de l'oxyde de zinc comme décrit dans le brevet français 1 193 721, un silicoaluminate comme décrit dans le brevet britannique 1 308 985, un hydroxyde alcalin ou alcalino-terreux anhydre ou hydraté comme décrit dans la demande de brevet français n° 83/01504 déposée le 27 janvier 1983 ou bien de l'eau et un phosphate et/ou un polyphosphate alcalin ou alcalino-terreux comme décrit dans la demande de brevet français n° 83/01 505 déposée le 27 janvier 1983.

Le constituant C utilisé dans l'invention est contenu dans des microcapsules constituées d'une pellicule imperméable.

Par pellicule imperméable on entend une pellicule à travers laquelle les constituants A, B et C ne peuvent pas s'infiltrer dans un sens ni dans l'autre. Ainsi le constituant C enfermé dans la microcapsule ne peut franchir la pellicule et réagir sur le constituant B et réciproquement. La matière servant à former une pellicule est choisie parmi les matières compatibles chimiquement avec l'accélérateur C pouvant former une pellicule imperméable autour d'un grain de l'accélérateur C et n'étant plus imperméable à la suite d'"un traitement thermique", à savoir généralement un chauffage compris entre 50 et 200°C, un traitement par irradiation au moyen d'un rayonnement électromagnétique HF,

microondes, infra-rouge ou ultraviolet, faisceau d'électrons, et/ou à la suite d'un traitement mécanique comme, par exemple un broyage ou un écrasement ou des vibrations, ces traitements pouvant par exemple faire fondre et/ou se décomposer et/ou se briser la pellicule.

Des exemples de ces matières sont le polystyrène, les copolymères acrylonitrile/styrène, le polychlorure de vinyle (PVC), le polydichlorure de vinyle (PVDC), un copolymère polychlorure de vinyle/polydichlorure de vinyle, l'éthylcellulose, le nitrate de cellulose, le polyméthacrylate de méthyle, les résines d'époxydes, les polysulfones, les polycarbonates et les polyimides.

La taille des microcapsules varie généralement de 1 à 500 µm. Toutefois pour assurer une dispersion satisfaisante du constituant C au sein des constituants A et B elle est de préférence comprise entre 5 et 200 µm.

On peut préparer l'encapsulation de l'accélérateur C dans une microcapsule constituée d'une pellicule imperméable par des moyens chimiques, physicochimiques, physiques et mécaniques, par exemple le procédé de coaservation décrit dans le brevet US 3 341 41 et le brevet français 1 304 561,le procédé de polymérisation interfaciale décrit dans le brevet français 2 413 123, le procédé de polymérisation in situ décrit dans le brevet US 3 330 693, le procédé de séchage dans un liquide décrit dans le brevet français 1 362 933 .

Les compositions selon l'invention peuvent contenir en outre de 1 à 150 parties, de préférence 5 à 120 parties, pour 100 parties des polymères $\alpha$-$\omega$ di(hydroxy)diorganopolysiloxaniques (A) de charges minérales (D). Ces charges peuvent se présenter sous la forme de produits très finement divisés dont le diamètre particulaire moyen est inférieur à 0,1 µm. Parmi ces charges (D) figurent les silices de combustion et les silices de précipitation ; leur surface spécifique est généralement supérieure à 40 $m^2/g$, et se situe le plus souvent dans l'intervalle 150 - 200 $m^2/g$.

Si des hydroxydes alcalins ou alcalino-terreux anhydres ou hydratés sont mis en oeuvre en tant qu'accélérateurs (C), ils sont utilisés généralement à raison de 0,01 à 7 parties, de préférence 0,05 à 5 parties, pour 100 parties de la somme des

constituants A, B, D. Ils sont choisis préférentiellement dans le groupe constitué des hydroxydes de lithium, de baryum, de strontium et de calcium, anhydres ou hydratés. Ces hydroxydes répondent à l'état anhydre aux formules : LiOH, $Ba(OH)_2$, $Sr(OH)_2$, $Ca(OH)_2$.

Si un mélange constitué par de l'eau et un phosphate et/ou un polyphosphate alcalin ou alcalino-terreux est mis en oeuvre en tant qu'accélérateurs C, il est utilisé généralement à raison de 0,01 à 7 parties, de préférence 0,05 à 5 parties, pour 100 parties de la somme des constituants A, B, D. Le phosphate et/ou le polyphosphate présent dans le mélange accélérateur est de préférence un sel dont le cation est choisi parmi le potassium, le sodium, le calcium ou le magnésium.

Si un aluminosilicate de sodium ayant une teneur en eau adsorbée de 5 à 15 % en poids est mis en oeuvre comme accélérateur C, on l'utilise à raison de 3 à 15 % en poids par rapport au poids total de A, B et D.

Si on utilise de l'oxyde de zinc on peut employer de 2 à 40 parties en poids d'oxyde de zinc pour 100 parties en poids de compositions silicones.

Les compositions organopolysiloxaniques conformes à l'invention, peuvent comporter en outre mais non nécessairement, en dehors des constituants A, B, C, D, des catalyseurs de durcissement habituellement choisis dans le groupe constitué par :

- des sels métalliques d'acides carboxyliques, de préférence des sels d'organoétains d'acides carboxyliques tels que le diacétate et le dilaurate de dibutylétain
- des produits de réaction des sels d'organoétains d'acides carboxyliques avec les esters titaniques (brevet américain 3 409 753)
- des dérivés organiques du titane et du zirconium tels que les esters titaniques et zirconiques (demande française 82/13 505 déposée le 30 juillet 1982).

Ces catalyseurs de durcissement sont utilisés habituellement à raison de 0,0004 à 6 parties, de préférence de 0,0008 à 5 parties pour 100 parties des polymères $\alpha$-$\omega$ di(hydroxy)diorganopolysiloxaniques (A).

Les compositions organopolysiloxaniques peuvent comporter également des adjuvants et additifs usuels, comprenant en particulier des stabilisants thermiques. Ces derniers produits, qui, par leur présence, améliorent la résistance thermique des élastomères silicones, peuvent être choisis parmi les sels, oxydes et hydroxydes de terres rares (et plus spécialement parmi les oxydes et hydroxydes cériques) ou parmi les oxydes de titane et de fer obtenus, de préférence, par combustion.

Outre les constituants principaux A, B, C, D et les additifs précités, des composés organopolysiloxaniques particuliers peuvent être introduits dans le dessein d'agir sur les caractéristiques physiques des compositions conformes à l'invention et/ou sur les propriétés mécaniques des élastomères issus du durcissement de ces compositions.

Ces composés organopolysiloxaniques sont bien connus ; ils comprennent plus spécialement :

(1f) des polymères

α-ω bis(triorganosiloxy)diorganopolysiloxaniques et/ou α(hydroxy), ω(triorganosiloxy)diorganopolysiloxaniques, de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyles, vinyles, phényles, 60 % au moins de ces radicaux organiques étant des radicaux méthyles et 10 % au plus étant des radicaux vinyles. La viscosité de ces polymères peut atteindre plusieurs dizaines de millions de mPa.s à 25°C ; ils comprennent donc des huiles d'aspect fluide à visqueux et des gommes molles à dures. Ils sont préparés selon les techniques usuelles décrites plus précisément dans les brevets français 978 058, 1 025 150, 1 108 764, 1 370 884. On utilise de préférence les huiles α-ω-bis(triméthylsiloxy)diméthylpolysiloxaniques de viscosité allant de 10 mPa.s à 1000 mPa.s à 25°C. Ces polymères qui jouent le rôle de plastifiants peuvent être introduits à raison d'au plus 150 parties, de préférence de 5 à 120 parties, pour 100 parties des polymères α-ω-di(hydroxy) diorganopolysiloxaniques (A).

(2f) des polymères méthylpolysiloxaniques ramifiés, liquides, ayant de 1,4 à 1,9 radical méthyle par atome de silicium constitués d'une combinaison de motifs de formules :

$(CH_3)_3SiO_{0,5}$

$(CH_3)_2SiO$ et

$CH_3SiO_{1,5}$

ils renferment de 0,1 à 8 % de groupes hydroxyles. Ils peuvent être obtenus par hydrolyse des chlorosilanes correspondants comme l'enseignent les brevets français 1 408 662 et 2 429 811. On utilise, de préférence, des polymères ramifiés dont les motifs sont répartis, selon les rapports suivants :

$(CH_3)_3SiO_{0,5}$ / $(CH_3)_2SiO$ = 0,01 à 0,15

et $CH_3SiO_{1,5}$ / $(CH_3)_2SiO$ = 0,1 à 1,5

Ces polymères peuvent être introduits à raison d'au plus 70 parties, de préférence de 3 à 50 parties, pour 100 parties des polymères α-ω-di(hydroxydiorganopolysiloxaniques (A). Ils apportent les propriétés de thixotropie notamment avec les silices traités.

(3f) des huiles diorganopolysiloxaniques bloquées par des groupes hydroxyles et/ou alcoxyles inférieurs ayant de 1 à 4 atomes de carbone, de faible viscosité en général comprise dans l'intervalle 2 mPa.s à 4 000 mPa.s à 25°C (si ces huiles sont bloquées uniquement par des groupes hydroxyles leur viscosité est inférieure à 700 mPa.s à 25°C) ; les radicaux organiques liés aux atomes de silicium de ces huiles sont, comme précédemment, choisis parmi les radicaux méthyles, vinyles, phényles, 40 % au moins de ces radicaux étant des radicaux méthyles et 10 % au plus étant des radicaux vinyles.

Comme groupes alcoxyles inférieurs bloqueurs de chaîne peuvent être cités les groupes méthoxyles, éthoxyles, isopropoxyles, n-propoxyles, n-butoxyles, isobutoxyles, tertiobutoxyles. Les taux en groupes hydroxyles et/ou alcoxyles s'étalent généralement de 0,5 à 20 %. Ces huiles sont préparées selon des techniques usuelles décrites plus précisément dans les brevets français 938 292, 1 104 674, 1 116 196, 1 278 281, 1 276 619.

De préférence, on utilise des huiles α-ω-dihydroxydiméthylpoly siloxaniques de viscosité 10 à 300 mPa.s à 25°C, des huiles α-ω-dihydroxyméthylphénylpolysiloxaniques de viscosité 200 à 600 mPa.s à 25°C et des huiles α-ω-diméthoxy (ou diéthoxy) diméthylpolysiloxaniques de viscosité 30 à 2 000 mPa.s à 25°C. Elles peuvent être introduits à raison d'au plus 50 parties, de préférence de 2 à 40 parties, pour 100 parties des polymères α-ω-di(hydroxy)diorganopolysiloxaniques (A). Ces huiles permettent de réduire la viscosité globale et sont considérées selon l'expression usuelle comme des "process aid".

(4f) des composés organosiliciques hydroxylés choisis parmi les composés répondant à la formule générale :

$$Z'SiZ_2(OsiZ_2)_wOH$$

qui sont solides à la température ambiante. Dans cette formule les symboles Z, identiques ou différents, représentent des radicaux méthyles, éthyles, n-propyles, vinyles, phényles ; le symbole Z' représente un radical hydroxyle où Z et le symbole w représente zéro, 1 ou 2. A titre d'exemples concrets de ces composés peuvent être cités : le diphénylsilanediol, le méthylphénylsilanediol, le diméthylphénylsilanol, le tétraméthyl-1,1,3,3 disiloxanediol, le diméthyl-1,3 diphényl-1,3 disiloxanediol, le tétraméthyl-1,1,5,5 diphényl-3,3 trisiloxanediol. Ils peuvent être introduits à raison d'au plus 30 parties, de préférence 0,5 à 20 parties, pour 100 parties des polymères α-ω-di(hydroxy)diorganopolysiloxaniques (A). Ils confèrent des propriétés thixotropantes au milieu qui en général se gélifie légèrement sous leur action. Les polymères α-ω-bis(triorganosiloxy)diorganopolysiloxaniques et/ou α -(hydroxy ω-(triorganosiloxy)diorganopolysiloxaniques décrits sous (1f) peuvent être remplacés, totalement ou partiellement, par des composés organiques inertes vis-à-vis des constituants A, B, C, D et miscibles au moins avec les polymères α-ω -di(hydroxy)diorganopolysiloxaniques (A). Comme exemples de ces composés organiques peuvent être mentionnés les polyalcoylbenzènes obtenus par alcoylation du benzène à l'aide d'oléfines à longue chaîne, en particulier des oléfines à

12 atomes de carbone issues de la polymérisation du propylène. Des composés organiques de ce type figurent par exemple dans les brevets français 2 392 476 et 2 446 849.

Les compositions selon l'invention peuvent être éventuellement utilisées après dilution dans des composés organiques liquides dans la mesure ou ces composés ne dissolvent pas la pellicule des microcapsules, les diluants sont de préférence des produits usuels commercialisés choisis parmi :

- les hydrocarbures aliphatiques, cycloaliphatiques, aromatiques, halogénés ou non, tels que le n-heptane, le n-octane, le cyclohexane, le méthylcyclohexane, le toluène, le xylène, le mésitylène, le cumène, le tétraline, le perchloroéthylène, le trichloroéthane, le tétrachloroéthane, le chlorobenzène, l'orthodichlorobenzène
- les cétones aliphatiques et cycloaliphatiques tels que la méthyléthylcétone, la méthylisobutylcétone, la cyclohexanone, l'isophorone
- les esters tels que l'acétate d'éthyle, l'acétate de butyle, l'acétate d'éthylglycol.

La préparation des compositions peut également avoir lieu en 2 étapes. Selon cette technique qui constitue un objet de la présente invention des compositions sont tout d'abord préparées par mélange à l'abri de l'humidité des constituants A, B, D et éventuellement des additifs et adjuvants usuels. Elles sont stables au stockage et durcissent seulement par exposition à l'air humide. Il est bien évident que de telles compositions pourraient, le cas échéant, être utilisées seules et leur durcissement ou réticulation, se développerait alors à partir des surfaces en contact avec l'air ambiant et se poursuivrait progressivement vers l'intérieur de la masse. La durée de leur durcissement complet serait relativement lente et dépendrait principalement de l'épaisseur. des couches déposées et du degré hydrométrique de l'atmosphère entourant les compositions. Il faudrait ainsi généralement une période de 24 heures à la température ambiante, avec un degré hygrométrique de 60 % pour réticuler correctement une couche de 4 mm d'épaisseur.

Dans une deuxième étape, on ajoute et homogénéise, à ces compositions, les accélérateurs de durcissement C préalablement microencapsulés.

On obtient ainsi des compositions monocomposantes dont la stabilité peut aller de quelques heures à plusieurs mois, voire plus d'un an, selon la nature et le degré d'imperméabilité de la pellicule.

Pour provoquer ou accélérer le durcissement de ces compositions il suffit de les soumettre à un traitement thermique et/ou mécanique pour rendre perméable la pellicule des microcapsules.

Les compositions ainsi traitées, conformes à l'invention, doivent alors être utilisées rapidement puisque leur durcissement, à l'opposé de celui des compositions monocomposantes classiques, se développe dans toute la masse. La durée de leur durcissement complet est très variable étant donné qu'elle dépend de la nature et des quantités mises en oeuvre des accélérateurs C, de la présence ou non d'eau et de la forme sous laquelle cette eau est introduite. En jouant sur ces divers paramètres il est possible d'obtenir des temps de durcissement s'échelonnant de quelques minutes à 60 minutes, ou plus. La température est aussi un paramètre important ; en effet, des variations de la valeur de la température ont des répercussions très nettes sur la vitesse de durcissement. Si la température augmente (les variations sont positives) la durée de durcissement est réduite ; dans le cas contraire la durée est augmentée.

Ainsi des réductions de durée de durcissement de moitié et parfois beaucoup plus peuvent être obtenues en exposant des compositions à des températures s'échelonnant par exmemple de 50 à 200°C au lieu de les abandonner à la température ambiante, c'est-à-dire comprise dans l'intervalle 15-25°C, après avoir fait un simple traitement mécanique pour diviser les microcapsules.

Bien entendu si la réticulation est effectuée à une température comprise entre 50 et 150°C, il est alors nécessaire d'utiliser une matière pour la pellicule des microcapsules qui ne donne pas des produits de décomposition dégradant l'élastomère

final comme par exemple le PVC ou le copolymère PVC/PVDC. Toutefois ces matières sont utilisables pour les applications ou la réticulation et les conditions d'emploi de l'élastomère se font à température ambiante. Par contre d'autres matières comme le polystyrène ne dégrade pas les propriétés mécaniques de l'élastomère à chaud. Cette dégradation qui peut également provenir de la nature et de la quantité d'agent de durcissement C peut être appréciée de façon très satisfaisante par le test de la DRC (déformation rémanente à la compression). Cet essai consiste à chauffer durant plusieurs heures (par exemple 72 heures à 150°C) une éprouvette en élastomère maintenue sous compression diminuant sa hauteur de 30 % et à mesure la déformation rémanente par la mesure en % de la diminution de l'épaisseur de l'éprouvette après le test.

Un autre objet de la présente invention est constitué par l'utilisation des compositions à durcissement rapide pour l'obtention de joints.

Les compositions conformes à l'invention peuvent être employées pour de multiples applications comme le jointoiement dans l'industrie du bâtiment, l'assemblage des matériaux les plus divers (métaux, matières plastiques, caoutchoucs naturels et synthétiques, bois, cartons, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

En outre, elles conviennent plus spécialement pour la formation de joints "in situ" utilisés dans l'industrie automobile. Ces joints "in situ" englobent plusieurs types, à savoir les joints "écrasés", les joints "en forme" et les joints "injectés.

Les joints "écrasés" sont formés à la suite de l'application d'un cordon pâteux des compositions sur la zone de contact entre 2 éléments métalliques à assembler. Le cordon pâteux est d'abord déposé sur l'un des éléments puis l'autre élément est aussitôt appliqué sur le premier ; il en résulte un écrasement du cordon avant qu'il ne se transforme en élastomère ; cet écrasement peut briser les microcapsules entraînant de ce fait la réticulation de la composition éventuellement sans traitement complémentaire. Ce

type de joints s'adresse à des assemblages ne devant pas être couramment démontés (joints de carter d'huile, joints de carter de distribution ...).

Les joints "en forme" sont également obtenus à la suite de l'application d'un cordon pâteux des compositions sur la zone de contact entre 2 éléments à assembler. Toutefois, après la dépose du cordon pâteux sur l'un des éléments, on provoque le durcissement complet du cordon en élastomère, par exemple par chauffage, et à ce moment-là seulement applique le deuxième élément sur le premier. Il en résulte qu'un tel assemblage est aisément démontable puisque l'élément qui est appliqué sur celui ayant reçu le joint, n'adhère pas à ce joint. Par ailleurs le joint, par son caractère caoutchouteux, épouse toutes les irrégularités des surfaces à jointoyer de ce fait, il est inutile (1) d'usiner soigneusement les surfaces métalliques devant être mises en contact les unes avec les autres et (2) de serrer avec force les assemblages obtenus ; ces particularités permettent de supprimer dans une certaine mesure, des joints de fixation, des entretoises, des nervures destinés habituellement à raidir et renforcer les éléments des assemblages.

Comme les compositions conformes à l'invention peuvent durcir rapidement dès la température ambiante après écrasement et/ou fusion des microcapsules, en présence ou en l'absence d'humidité, en milieu confiné, ou à l'air ambiant, il en résulte que les joints "en forme" (et aussi les autres joints "in situ") découlant du durcissement de ces compositions peuvent être fabriqués dans des conditions très contraignantes. Ils peuvent, par exemple, être fabriqués sur les chaînes de montage usuelles de l'industrie automobile munies d'un appareil automatique de dépose des compositions. Cet appareil automatique peut posséder bien souvent une tête mélangeuse équipée d'une buse de dépose, celle-ci se déplaçant selon le profil des joints à fabriquer. La tête mélangeuse peut recevoir la composition polysiloxanique comportant l'accélérateur microencapsulé, elle peut disposer également d'une troisième entrée permettant d'introduire un solvant servant à rincer l'installation après usage (cyclohexane...). On peut alors provoquer la réticulation par un chauffage approprié du cordon ou du joint déposé.

Les compositions, fabriquées et distribuées au moyen de cet appareil doivent avoir une durée de durcissement bien ajustée pour d'une part éviter des prises en masse dans la tête mélangeuse et d'autre part obtenir une réticulation complète après la fin de la dépose du cordon pâteux sur les pièces à jointoyer. Conformément à l'invention on peut éviter cette prise en masse du fait de la microencapsulation. Ces joints "en forme" conviennent plus spécialement pour les joints de couvre-culbuteurs, de couvercles de boites à vitesses, d'entretoises de distribution et même de carters d'huile.

Les joints injectés dont la réticulation a été au préalable provoquée sont formés en milieu confiné, dans des cavités souvent complètement closes ; les compositions placées dans ces cavités se transforment rapidement en élastomères dont les propriétés sont identiques à celles d'élastomères découlant du durcissement des compositions à l'air ambiant. Ces joints peuvent assurer par exemple l'étanchéité des paliers de vilbrequins.

Les compositions conformes à l'invention conviennent également pour la formation de joints à durcissement rapide dans d'autres domaines que l'automobile. Ainsi elles peuvent servir à coller et à jointoyer des armoires électriques en matière plastique, à produire des joints pour aspirateurs et pour fers à repasser à la vapeur.

Les élastomères issus du durcissement des compositions conformes à l'invention ont des propriétés mécaniques sensiblement analogues à celles des élastomères issus des compositions monocomposantes connues donc formées par simple mélange des constituants A, B, D et éventuellement d'additifs usuels sans l'introduction des accélérateurs C. En particulier, les déformations rémanentes à la compression peuvent être relativement faibles, de l'ordre par exemple de 8 à 35 % ; en outre, la réticulation complète mesurée par la dureté Shore A est obtenue dès la fin des temps de réticulation précédemment mentionnés lesquels s'étendent généralement de quelques minutes à 60 minutes, parfois plus mais jamais au-delà de 3 heures. Dans le cas des compositions monocomposantes, la réticulation complète demande dans les conditions les plus favorables, au moins une dizaine d'heures.

D'autres avantages et caractéristiques de la présente invention apparaîtront à la lecture des exemples suivants donnés à titre illustratif nullement limitatif.

EXEMPLE 1 -

Dans un erlenmeyer, on dissout 12,5 g de polystyrène GEDEX ® commercialisé par CDF Chimie dans 125 $cm^3$ de dichlorométhane. On ajoute 10 g de chaux {$Ca(OH)_2$} en poudre très fine de granulométrie d'environ 10 µm et on mélange (chaux éteinte aérienne qualité ordinaire commercialisée par la société française Balthazard).

Dans un cristallisoire, on dissout 10 g de caséine dans 1 litre d'eau sodée (pH environ 13) et on chauffe à 38°C.

On verse alors, sous forte agitation, la dispersion de chaux dans la solution de caséine. Lorsqu'on a émulsifié le collodion, on diminue la vitesse d'agitation tout en maintenant la température vers 38°C (± 1°).

Après 1 h 30 le solvant étant évaporé, on filtre sur verre fritté n° 3 dont le diamètre des pores est compris entre 15 et 40 µm (commercialisé par Prolabo) ou on laisse décanter à la température ambiante. Après lavage à l'eau, on effectue un rapide lavage avec HCl (N/10) ; puis de nouveau un lavage à l'eau.

Les microcapsules obtenues contiennent environ 30 % de $Ca(OH)_2$ et mesurent entre 10 et 150 µm. L'accélérateur encapsulé ainsi obtenu est dénommé $C_1$.

EXEMPLE 2 -

10 g de copolymère PVC/PVDC IXAN ® SGA/1 commercialisé par SOLVAY sont dissous dans 100 $cm^3$ de dichlorométhane. On ajoute 1,6 g d'émulsifiant (Soprophor ® 3D33 commercialisé par Soprosoie).

Quand la solution est prête, on y disperse de façon homogène 10 g de chaux et on additionne du méthanol goutte à goutte pour précipiter le polymère (100 $cm^3$ en 2 heures) sous forte agitation.

On chauffe légèrement, sous courant d'azote, pour évaporer le dichlorométhane. On filtre sur verre fritté n° 3 et on rince au méthanol.

Les capsules obtenues mesurent entre 10 et 100 µm et contiennent 50,6 % de chaux. L'accélérateur ainsi obtenu est dénommé $C_2$.

EXEMPLE 3 -

10 g du copolymère PVC/PVDC sont dissous dans 100 $cm^3$ d'acétone. On ajoute 10 g de chaux et on homogénéise. On précipite par addition goutte à goutte sous forte agitation de 100 $cm^3$ d'eau contenant 2 % de Tétronic ® 908 commercialisé par Marles Kuhlmann Wyandotte (MKW).

On filtre sur fritté n° 3. On rince 2 fois avec 50 g de méthanol et on sèche sous courant d'air.

Les microcapsules obtenues contiennent environ 50 % de chaux et mesurent entre 10 et 100 µm.

L'accélérateur ainsi obtenu est dénommé $C_3$.

EXEMPLE 4 -

On prépare une composition $G_1$ durcissant dès la température ambiante en élastomère, par mélange des constituants suivants :

- 100 parties d'une huile α-ω-di(hydroxy)diméthylpolysiloxanique de viscosité 4 000 mPa.s à 25°C
- 20 parties d'une silice de combustion de surface spécifique 200 $m^2/g$
- 20 parties de quartz broyé de diamètre particulaire moyen 5 microns
- 20 parties d'oxyde de titane du type rutile de diamètre particulaire moyen 8 microns
- 1 partie d'une huile α-ω-di(hydroxy)méthylphénylpolysiloxanique de viscosité 350 mPa.s à 25°C
- 6 parties de méthyl(triacétoxy)silane.

Cette composition $G_1$ est dispersée dans 72 parties de cyclohexane anhydre. On obtient ainsi une dispersion homogène $D_1$ renfermant sensiblement 70 % de la composition $G_1$. Cette dispersion est stockée dans des récipients en aluminium étanches à l'humidité ; elle ne montre aucune modification d'aspect après 6 mois de stockage.

On prépare d'autre part 3 empâtages $E_1$, $E_2$, $E_3$ renfermant chacun un accélérateur de durcissement $C_1$, $C_2$, $C_3$ microencapsulé préparé selon les exemples 1 à 3 de la composition $G_3$.

Les compositions de ces 3 empâtages sont les suivantes :

$E_1$ : 100 parties de $D_1$ et
2,5 parties de $C_1$ (soit 0,75 g de chaux)

$E_2$ : 100 parties de $D_1$ et
2,5 parties de $C_2$ (soit 0,8 g de chaux)

$E_3$ : 100 parties de $D_1$ et
2,5 parties de $C_3$ (soit 1,2 g de chaux).

On prépare un empâtage témoin $E_0$ dont l'accélérateur est la même chaux que celle des exemples 1 à 3 mais non encapsulée.

$E_0$ : 100 parties de $D_1$
0,64 parties de chaux.

On introduit dans un récipient cylindrique en plastique, de volume 500 $cm^3$ 100 g de l'un des 4 empâtages $E_0$, $E_1$, $E_2$ et $E_3$ ; on malaxe aussitôt le contenu du récipient à l'aide d'une spatule et poursuit ce malaxage pendant environ 1 minute 15 secondes; on verse ensuite rapidement le mélange dans un flacon cylindrique en verre de volume 125 $cm^3$, équipé d'un couvercle percé de 2 trous, l'un des trous permettant le passage d'un courant d'azote sec, l'autre assurant le passage de l'aiguille n° 7 d'un viscosimètre Brookfield.

Après la fermeture du couvercle, la mise en place de l'aiguille du viscosimètre et le branchement de l'arrivée d'un courant d'azote sec, on met en marche la rotation de l'aiguille du viscosimètre à la vitesse de 2,5 tours par minute. La période de temps comprise entre le début du malaxage à la spatule et le début de la rotation de l'aiguille du viscosimètre est de 2 minutes.

On suit l'évolution de la viscosité du mélange contenu dans le flacon en verre en fonction du temps et arrête la rotation de l'aiguille lorsque la lecture du cadran du viscosimètre indique une viscosité voisine de $16.10^5$ mPa.s à 25°C.

Le tableau I rassemble ci-après les temps nécessaires pour atteindre une viscosité voisine de $16.10^5$ mPa.s à 25°C.

TABLEAU I

| EMPATAGE | | | | | | | |
|---|---|---|---|---|---|---|---|
| $E_0$ | | $E_1$ | | $E_2$ | | $E_3$ | |
| temps (mn) | Viscosité (m.Pa s) | temps (mn) | Viscosité (m.Pa s) | temps (mn) | Viscosité (m.Pa s) | temps (mn) | Viscosité (m.Pa s) |
| 0 | 18 500 | 0 | 37 800 | 0 | 15 000 | 0 | 40 000 |
| 5 | 45 500 | 60 | 48 000 | 30 | 18 000 | 60 | 43 000 |
| 6 | 32 500 | 120 | 62 600 | 150 | 25 500 | 120 | 43 500 |
| 7 | 158 000 | 180 | 88 000 | 210 | 32 500 | 180 | 43 500 |
| 8 | 324 000 | 420 | 144 000 | 270 | 48 000 | 240 | 43 500 |
| 9 | 750 000 | | | 330 | 76 000 | 360 | 43 500 |
| 10 | 1 800 000 | | | 390 | 150 000 | | |

On remarque que, par rapport à $E_0$, bien que la quantité de chaux introduite dans $E_1$, $E_2$ et $E_3$ soit plus forte, on obtient une évolution de viscosité très nettement ralentie pour $E_1$ et $E_2$ et complètement stoppée pour $E_3$.

EXEMPLE 5 -

On réalise 5 nouvelles compositions $F_0$, $F_1$, $F_2$, $F_3$ en mélangeant la composition $G_1$ préparée à l'exemple 4 avec de l'accélérateur $G_0$ constitué par de la chaux non encapsulée identique à celle utilisée dans les exemples 1 à 3 et des accélérateurs encapsulés $C_1$, $C_2$ et $C_3$ préparés aux exemples 1 à 3.

Ces compositions de $F_0$, $F_1$, $F_2$, $F_3$ sont données dans le tableau II ci-après :

TABLEAU II

| | $G_1$ | ACCELERATEUR |
|---|---|---|
| $F_0$ | 100 g | $C_0$ : 0,64 g |
| $F_1$ | 100 g | $C_1$ : 2,5 g soit 0,8 g $Ca(OH)_2$ |
| $F_2$ | 100 g | $C_2$ : 2,5 g soit 0,8 g $Ca(OH)_2$ |
| $F_3$ | 100 g | $C_3$ : 2,5 g soit 1,2 g $Ca(OH)_2$ |

Les compositions $F_0$ à $F_3$ sont aussitôt étalées sous forme d'une couche de 4 mm d'épaisseur sur des plaques de polyéthylène. Un lot de plaques est placé dans une étuve à 40°C ou à 150°C. Bien que la mise en température de la composition silicone soit lente on obtient une réticulation suffisante c'est-à-dire une dureté shore A ≥ 40 en un temps assez court. Les résultats sont rassemblés dans le tableau III ci-après. Le temps est mesuré à partir de l'instant ou les plaques sont installées dans les enceintes chauffées.

TABLEAU III

| | Etuve à 100°C | | Etuve à 150°C | |
|---|---|---|---|---|
| | dureté shore A | temps (mn) | dureté shore A | temps (mn) |
| $F_0$ | | | | |
| $F_1$ | 30<br>40<br>45 | 20<br>30<br>45 | 40<br>45 | 15<br>20 |
| $F_2$ | 25<br>45 - 50 | 10<br>15 | | |
| $F_3$ | 40<br>45 | 15<br>20 | | |

De ce tableau III il résulte que après avoir rendu perméables les microcapsules par un traitement thermique à 100°C, on transforme en un temps inférieur à 1 heure la composition en élastomères.

EXEMPLE 6 -

On mesure dans cet exemple la déformation rémanente à la compression (DRC) selon la norme ASTM D 395 Méthode B sur la composition $G_1$, $F_0$, $F_1$, $F_2$ et $F_3$ (compression 30 % et mesure de la déformation rémanente après 70 heures à 150°C.

Les résultats sont rassemblés dans le tableau IV ci-après :

TABLEAU IV

| Compositions | DRC |
|---|---|
| $G_1$ | 40 % |
| $F_0$ | 30 % |
| $F_1$ | 10 - 30 % |
| $F_2$ | 110 - 120 % |
| $F_3$ | |

Les résultats avec $F_1$ sont excellents. Par contre les résultats obtenus avec $F_2$ et $F_3$ démontrent qu'il ne faut utiliser l'accélérateur $C_2$ ou $C_3$ que dans des applications ou l'élastomère est maintenu à une température qui n'est pas supérieure à la température ambiante.

# R E V E N D I C A T I O N S

1 - Composition organopolysiloxanique pouvant réticuler en élastomère comprenant un polysiloxane polyhydroxylé A, un polyacyloxysilane B et un accélérateur de durcissement C, caractérisée en ce que l'accélérateur de durcissement C est contenu dans des microcapsules constituées d'une pellicule imperméable, ladite pellicule n'étant plus imperméable sous l'effet d'un traitement thermique et/ou par irradiation et/ou mécanique adaptés.

2 - Composition selon la revendication 1, caractérisée en ce que la pellicule est en une matière choisie parmi le polystyrène, les copolymères acrylonitrile/styrène, le polychlorure de vinyle (PVC), le polydichlorure de vinyle (PVDC), les copolymères PVC/PVDC, l'éthylcellulose, le nitrate de cellulose, le polyméthacrylate de méthyle, les résines d'époxydes, les polysulfones, les polycarbonates et les polyimides.

3 - Composition selon la revendication 1 ou 2, caractérisée en ce que le traitement thermique est un chauffage à une température comprise entre 50 et 200°C, le traitement par irradiation est une irradiation par un rayonnement électromagnétique HF, microondes, infra-rouge ou ultraviolet et le traitement mécanique est choisi parmi un broyage et un écrasement.

4 - Composition selon l'une quelconque des revendications précédentes, caractérisé en ce que la taille des microcapsules est comprise entre 5 et 200 µm.

5 - Composition selon l'une quelconque des revendications précédentes, caractérisé en ce que l'accélérateur est choisi parmi un hydroxyde alcalin ou alcalineux-terreux anhydre ou hydraté, un mélange constitué par de l'eau et un phosphate et/ou un polyphosphate alcalin ou alcalino-terreux, un aluminosilicate de sodium ayant une teneur en eau adsorbée de 5 à 15 % en poids.

6 - Composition selon l'une quelconque des revendications précédentes, caractérisée en ce qu'elle comporte en outre de 1 à 150 parties d'une charge minérale D pour 100 parties de constituant A.

7 - Composition selon la revendication 6, caractérisée en ce qu'elle comporte :

A - 100 parties de polymères principalement α-ω -di(hydroxy)diorganopolysiloxaniques, de viscosité 700 à 1 000 000 mPa.s à 25°C, constitués chacun d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogènes, des groupes cyano.

B - 2 à 20 parties d'agents réticulants de formule générale :

$$R_pSi(OCOR')_{4-p}$$

dans laquelle le symbole R a la signification donnée sous (A), le symbole R', représente un radical hydrocarboné exempt d'insaturation aliphatique, ayant de 1 à 15 atomes de carbone et le symbole p représente zéro ou un.

C - 1 à 150 parties de charges minérales

D - 0,01 à 7 parties, pour 100 parties de A + B + C d'accélérateurs de durcissement contenus dans des microcapsules constituées d'une pellicule imperméable

8 - Composition selon l'une quelconque des revendications précédentes caractérisée en ce que les constituants A et B sont remplacés par les produits dévolatilisés provenant de la réaction stoechiométrique de A sur B.

9 - Composition selon l'une quelconque des revendications 1 à 8, caractérisée en ce qu'elle se présente sous la forme d'une composition monocomposante stable au stockage.

10 - Composition selon l'une quelconque des revendications 1 à 8, caractérisée en ce qu'elle se présente sous la forme d'une composition bicomposante, une composante étant constituée par l'accélérateur C microencapsulé.

11 - Procédé pour l'obtention d'une composition telle que définie à la revendication 9, caractérisé en ce qu'on prépare d'une part une composition monocomposante par mélange à l'abri de l'humidité des constituants A, B et éventuellement D ainsi que des additifs et adjuvants usuels, et d'autre part un accélérateur microencapsulé C puis on y ajoute et homogénéise les constituants A, B et C avant l'emploi afin d'obtenir une composition à un seul emballage stable au stockage.

12 - Procédé pour l'obtention d'une composition telle que définie à la revendication 10, caractérisé en ce qu'on prépare d'une part une composition monocomposante par mélange à l'abri de l'humidité des constituants A, B et éventuellement D ainsi que des additifs et adjuvants usuels, puis on y ajoute et homogénéise au moment de l'emploi l'accélérateur de durcissement encapsulé.

13 - Utilisation de compositions selon l'une quelconque des revendications 1 à 10 pour l'obtention de joints.